# EUROPÄISCHE PATENTSCHRIFT

(11) **EP 0 294 315 B1**
(45) Veröffentlichungstag und Bekanntmachung des Hinweises auf die Patenterteilung: **01.09.1993**
(21) Anmeldenummer: 88730121.6
(22) Anmeldetag: 19.05.1988
(51) Int. Cl.: B27N 3/00, A01G 5/04

(54) **Spanlos geformter poröser Formkörper**
Moulded porous product
Pièce poreuse moulée

(30) Priorität: 21.05.1987 DE 8707318 U; 09.09.1987 DE 3730208 U
(43) Veröffentlichungstag der Anmeldung: 07.12.1988
(73) Patentinhaber: Bervar, Barbara, D-31737 Rinteln (DE)
(72) Erfinder: Bervar, Wolfgang, D-3260 Rinteln (DE)
(74) Vertreter: Thömen, Uwe, Dipl.-Ing.

(56) Entgegenhaltungen:
- DD-A- 101 328

## Beschreibung

Die Erfindung betrifft einen spanlos gefertigten porösen Formkörper nach dem Oberbegriff des Anspruchs 1.

Ein bekanntes Ausgangsmaterial für poröse Formkörper bildet Styropur. Neben Anwendungen in der Wärmeschutztechnik und in der Verpackungsindustrie wird es auch als Steckunterlage für Grabschmuck zu Totensonntag und Allerheiligen verwendet, wo es die bisherigen Strohgebinde wegen der leichteren Formgebung ablöst. Aus optischen Gründen ist das Material nicht geeignet, nackt verwendet zu werden. Es wird vielmehr mit einem pflanzlichen Grünbelag verkleidet, auf dem gegebenenfalls noch weitere Pflanzenprodukte, z.B. Tannenzapfen, aufgesteckt werden.

Da als Grünbelag einheimische Moose aus Naturschutzgründen verboten werden, muß zunehmend Rentierflechte verwendet werden, die aber mit verhältnismäßig hohen Transportkosten durch die notwendige Einfuhr belegt ist. Die Herstellung des Grabschmuckes erfolgt durch Aufstecken der Pflanzenteile mit Nadeln und ist sehr arbeitsintensiv.

Bei trockener Witterung reicht die in den Pflanzenteilen gespeicherte Feuchtigkeit nicht aus, diese längere Zeit frischzuhalten. Da auch der Formkörper aus Styropur keine wasserspeichernden Eigenschaften hat, verwelken die Pflanzen rasch, so daß der so hergestellte Grabschmuck nach verhältnismäßig kurzer Zeit in den Abfall gelangt.

Hier tritt als weiteres Problem die mangelnde biologische Abbaubarkeit auf, die Styropur enthaltende Pflanzenabfälle praktisch zur Kompostierung unbrauchbar macht. Dieses Problem ist außer bei Grabschmuck auch bei anderen kurzlebigen Formkörpern aus Styropur , z.B. Verpackungen, vorhanden.

Schließlich kommt noch hinzu, daß als Ausgangsprodukt nicht erneuerbare Rohstoffe verwendet werden und die Herstellung energie- und maschinenaufwendig ist.

Aus der DD-A-101 328 ist bereits ein Verfahren zur Herstellung eines porösen Formkörpers bekannt, wobei Korkgranulat mit einem Kleber vermischt wird. Die Mischung wird in eine die spätere Oberflächenkontur darstellende Form eingebracht, wobei die Mischung in der Form bei niedrigem Umgebungsdruck in einen gebundenen Zustand übergeht.

Neben Korkteilchen werden aber auch Schaumwerkstofflocken und Gummischnitzel zugefügt, die biologisch nicht oder sehr schwer abbaubar sind. Dabei bilden Gummischnitzel zudem einen Werkstoff mit relativ hohem spezifischen Gewicht, wodurch bei entsprechendem Anteil auch das Gesamtgewicht des Verbundwerkstoffes erhöht wird.

Der Erfindung liegt die Aufgabe zugrunde, einen spanlos gefertigten porösen Formkörper zu schaffen, der leicht, elastisch, fest und gut bearbeitbar ist und als Abfall biologisch abbaubar ist.

Diese Aufgabe wird bei einem spanlos gefertigten porösen Formkörper nach dem Oberbegriff des Anspruchs durch die im kennzeichnenden Teil angegebenen Merkmale gelöst.

Das verwendete Korkgranulat tritt als Abfallprodukt bei anderen Erzeugnissen aus Kork auf. Es ist leicht, optisch angenehm, wie Styropur wärmedämmend und elastisch und besitzt darüberhinaus eine große Festigkeit und Rückhaltekraft für eingedrungene Materialien wie Nadeln oder Klammern. Die Erzeugung des Korks selbst sowie die Verarbeitung in den Formkörper verbraucht nur geringe Energie. Weder bei der Herstellung des Korkgranulats noch bei der Verarbeitung des Formkörpers entstehen schädliche Abfallprodukte. Nach Gebrauch kann der Formkörper einschließlich des aus Naturprodukten hergestellten Klebers biologisch abgebaut und mit anderen Pflanzenteilen zu Kompost umgewandelt werden.

Die bereits mit dem Naturprodukt Kork verbundene Eigenschaften kommen auch dem Formkörper zugute. Durch das Granulat gebildete Lufteinschlüsse führen dazu, daß der Formkörper noch leichter als das in kompakter Form, also nicht als Granulat, vorliegende Ausgangsmaterial ist. Ferner könnnen Haken, Nägel, Nadeln oder Klammern leicht hineingesteckt und sicher verankert werden. Dementsprechend ist der Formkörper auch als Steckunterlage für Grabschmuck geeignet.

Die Verbindung des Korkgranulats durch Kleber verleiht dem Formkörper feste und vor allem bruchsichere Eigenschaften. Der Formkörper ist durch die ausschließliche Verwendung von Naturprodukten biologisch leicht abbaubar und kann daher wie pflanzlicher Abfall kompostiert werden.

Die zusätzlich verwendeten Bestandteile mit Gewichtsanteilen von 5% Sägemehl und 5% Kiefernnalden verbessern die Festigkeit und Elastizität des Formkörpers ohne ihre sonstigen Eigenschaften, also den optischen Eindruck, das spezifische Gewicht, die Wärme und Schalldämmung sowie die biologische Abbaubarkeit zu beeinträchtigen.

Der verwendete Anteil von Sägemehl setzt sich in gößere Öffnungen und bindet so die benachbarten Korkgranulatbestandteile besser aneinander. Die Kiefernnadeln enthalten einen großen Harzanteil und dieser unterstützt bei gleichzeitiger Verbesserung der elastischen Eigenschaften die Klebwirkung des Klebers.

Als Kleber wird ein Harnstoffkondensationsprodukt verwendet.

Dieses besitzt eine ausgezeichnete Affinität gegenüber Kork und läßt sich bei verhältnismäßig geringer Temperatur aushärten. Auf diese Weise wird ein Verkohlen des Korkgranulats oder der übrigen Bestandteile verhindert. Als Naturprodukt ist es ebenfalls biologisch abbaubar.

Vorzugsweise umfaßt der Formkörper ein Korkgranulat, das seinerseits aus Korkschrot einer Korngröße von vorzugsweise 1 - 2mm und Korkmehl besteht. Die Gewichtsanteile betragen dabei 60% Korkschrot und 40% Korkmehl.

Dieses Material ist als Abfallprodukt bei der Korkherstellung erhältlich und derzeit günstig aus Portugal importierbar. Es gestattet, ein optisch ansprechendes, sich auch feinen Oberflächenkonturen anpassendes Produkt zu schaffen. Die Verwendung von Materialien unterschiedlicher Korngröße bietet die Möglichkeit, unterschiedliche Poriositätsgrade zu erzielen. Bei dem hier bevorzugten Mischungsverhältnis wird eine besonders günstige Vereinigung der Festigkeitseigenschaften und Poriosität erreicht.

Weiterhin ist ein Überzug aus Kaltleim vorgesehen, der die gesamte Oberfläche des Formkörpers versiegelt.

Dadurch erhält die Oberfläche ergänzend zu ihrer Verbindung mit der darunterliegenden Granulatschicht eine bsondere Festigkeit, die ein Abbröckeln einzelner Granulatkörper verhindert, wie sie besonders von Styropurkörpern her bekannt ist. Durch die Versiegelung kann ferner ein Eindringen von Wasser entweder verhindert oder dosiert ermöglicht werden.

Bei einem bevorzugten Anwendungsfall ist der Formkörper als herz-, kreuz-, kissen- oder rhombusförmige Steckunterlage für Grabschmuck ausgebildet.

Der poröse Formkörper kann durch die leichte Herstellbarkeit auch von Kleinbetrieben, wie Friedhofsgärtnereien nach Kundenwünschen gefertigt werden. Er ist sowohl ohne Besatz durch seine optisch ansprechende Oberfläche als auch mit Besatz verwendbar. Durch die verglichen mit anderen Materialien geringen Kosten können bei gleichem Preis größere, ansprechendere Ausführungen hergestellt werden. Dabei kann auch auf den aus optischen Gründen sonst üblichen Belag verzichtet werden und so das Abernten natürlich wachsender Pflanzenarten vermindert werden.

Der poröse Formkörper kann auch Wasser speichern und so einen eventuell vorhandenen Belag aus lebenden Pflanzenteilen mit Feuchtigkeit versorgen und den Grabschmuck auch über Zeiten trockener Witterung frisch halten.

Nach dem Vertrocknen oder Verwelken der Pflanzenteile kann er schließlich mit diesen kompostiert werden, so daß eine gesonderte Entsorgung entfallen kann.

In Weiterbildung der vorgenannten Ausgestaltung ist eine Ausnehmung vorgesehen, die zur Aufnahme eines mit Exoten wie z.B. Baumwollfrucht besetzten Korkens dient. Dabei kann die Ausnehmung einen Reibschlüssigen Kontakt mit dem eingesetzten Korken herbeiführen.

Durch diese Ausgestaltung ist es auch möglich, einen Belag oder eine Pflanzenbedeckung ohne Klammern auf dem Formkörper zu befestigen. Dies ist einmal weniger arbeitsaufwendig, da der Korken mit dem Pflanzenbesatz vorgefertigt werden kann und vermeidet auch die Verunreinigung des späteren Abfalls mit schwer verrottbaren Metallteilen.

Weiterbildungen und vorteilhafte Ausführungsformen der Erfindung ergeben sich aus den weiteren Ansprüchen, der Beschreibung und der Zeichnung, anhand der das Herstellungsverfahren und der Aufbau des Formkörpers nachfolgend erläutert wird. In der Zeichnung zeigen:
- Fig. 1: einen Teilquerschnitt durch ein Formkörper in makrokopischer Darstellung,
- Fig. 2: einen Formkörper in perspektivischer Sicht in einer Ausgestaltung als kreuzförmige Steckunterlage für Grabschmuck.

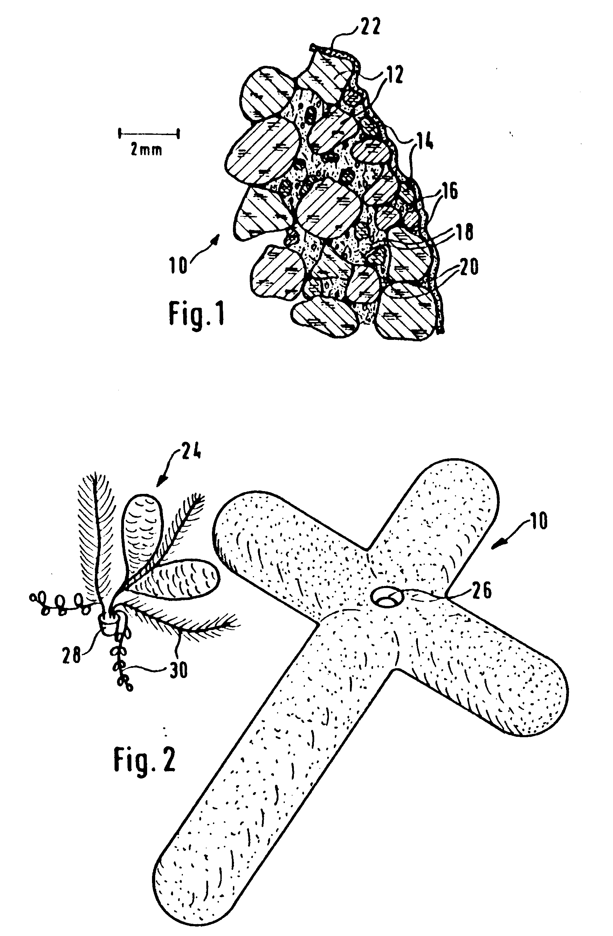

Der in Fig. 1 dargestellte Teilquerschnitt des Formkörpers 10 umfaßt Korkgranulat aus Korkschrot 12 und Korkmehl 14 das durch Kleber 20 gebunden ist. In den Zweichenräumen zwischen dem Korkschrot 12 befindet sich Sägemehl 16 sowie Kiefernnadeln 18. Die Außenfläche des Formkörpers 10 ist mit einer Leimschicht 22 versehen.

Das Produkt wird durch Mischen der genannten Bestandteile hergestellt, wobei Gewichtsanteile von 65% Korkgranulat, 5% Sägemehl, 5% Kiefernnadeln und 25% Kleber verwendet werden. Das Korkgranulat seinerseits besteht aus 60% Korkschrot 12 einer Korngröße zwischen 1 - 2mm und 40% Korkmehl. Als Kleber 20 dient ein flüssiges Harnstoffkondensationsprodukt.

Die Bestandteile werden zunächst in den angegebenen Gewichtsanteilen gemischt und als fast trockene homogene Masse in eine Form gefüllt. Die Form besitzt zweckmäßig die Oberflächenkontur des späteren Formkörpers und kann aus dünnem Stahl oder Weißblech bestehen. Die mit einer Abdeckung versehene Form wird dann unter Atmosphärendruck erwärmt und eine Zeit lang bei 100° C gehalten, bis die Bestandteile zu einer festen Masse gebacken sind. Während der Erwärmung und des Backens geht die Mischung durch das Verdampfen flüssiger Bestandteile des Klebers etwas auf.

Nachdem anschließend die fest gebackene Substanz aus der Form entnommen ist, wird sie in ein Leimbad getaucht, das mit 25% Leim und 75% Wasser angesetzt ist. Dabei erhält die Oberfläche eine später unsichtbare Beschichtung, die die Oberflächenfestigkeit vorteilhaft verbessert und je nach Art des Kaltleims auch eine mehr oder weniger große Versiegelung der inneren Poren herbeiführt. Nach dem Trocknen an der Luft ist die Herstellung des Formkörpers beendet und dieser kann seinen vorgesehenen Verwendungszwecken zugeführt werden.

Die Fig. 2 zeigt als Anwendung hierzu eine kreuzförmige Steckunterlage 10 für Grabschmuck 24. Die Oberflache vermittelt, was durch die Zeichnung allerdings nicht darstellbar ist, einen korkfarbenen ansprechenden Eindruck, der sich gut in das herbstliche Landschaftsbild, in dem Grabschmuck vorzugsweise verwendet wird, einfügt. In der Mitte der Steckunterlage 10 befindet sich eine Ausnehmung 26, die z.B. bei Herstellung des Formkörpers durch eine entsprechende Ausgestaltung der Form ausgeprägt werden kann.

Die Ausnehmung 26 dient dazu, einen Korken 28 aufzunehmen, der mit pflanzlichen Bestandteilen 30 oder Exoten, z.B. Baumwollfrucht, besteckt ist. Dieser Korken 28 kann in die Ausnehmung 26 eingesteckt werden und dort durch Kraftschluß oder auch mittels eines Heißklebers festgehalten werden.

Die gezeigte Steckunterlage 10 ist auch unverändert zur Aufnahme weiterer Pflanzenteile, z.B. Moose oder Flechten geeignet, die in an sich bekannter Weise durch Nadeln oder Klammern befestigt werden. Dabei ermöglicht die vorerwähnte Poriosität das Einstecken der Klammern mit geringem Kraftaufwand. Die elastischen Eigenschaften sowie die Festigkeit des Materials führen dazu, daß die Klammern anschließend durch eine verhältnismäßig große Rückhaltekraft im Formkörper festgehalten werden und so die Pflanzenteile sicher festlegen. Dadurch ist die Herstellung einmal ohne großen Kraftaufwand möglich, zum anderen kommt man mit verhältnismäßig wenig Klammern aus ohne daß ein Herausziehen durch die Eigenelastizität des Pflanzenbelages zu befürchten ist.

In weiterer vorteilhafter Ausgestaltung der Erfindung läßt sich der Formkörper auch als Pflanzen- oder Anzuchttopf ausbilden, wie sie insbesondere auf Friedhöfen verwendet werden.

Da solche Pflanzen- oder Anzuchttöpfe aufgrund der Eigenschaften des Formkörpers aus einem verrottbaren Material bestehen, welches biologisch abbaubar ist, ergeben sich keine nachteiligen Umweltbelastungen. Dies ist ein erheblicher Vorteil gegenüber den bekannten Pflanzentöpfen aus Kunststoff oder aus Ton.

## Patentansprüche

1. Spanlos geformter poröser Formkörper als Steckunterlage zum Aufbringen pflanzlicher Dekorationen, dadurch gekennzeichnet, daß der Formkörper aus den Bestandteilen 65 % Korkgranulat (12, 14), 5 % Sägemehl (16), 5 % Kiefernnadeln (18) und 25 % Bindemittel (20) aus Harnstoffkondensationsprodukten besteht.

2. Formkörper nach Anspruch 1, dadurch gekennzeichnet, daß das Korkgranulat Korkschrot (12) einer Korngröße von vorzugsweise 1 mm bis 2 mm und Korkmehl (14) umfaßt.

3. Formkörper nach Anspruch 2, dadurch gekennzeichnet, daß die Gewichtsanteile des Korkschrots (12) 60 % und die des Korkmehls (14) 40 % betragen.

4. Formkörper nach einem oder mehreren der vorhergehenden Ansprüche 1 bis 3, dadurch gekennzeichnet, daß er fein verteilte Kiefernnadeln (18) oder Kiefernschrot enthält.

5. Formkörper nach einem oder mehreren der vorhergehenden Ansprüche 1 bis 4, dadurch gekennzeichnet, daß er einen Überzug aus Kaltleim (22) umfaßt.

6. Formkörper nach einem oder mehreren der vorhergehenden Ansprüche 1 bis 5, dadurch gekennzeichnet, daß er als herz-, kreuz-, kissen- oder rhombusförmige Steckunterlage (10) für Grabschmuck (24) ausgebildet ist.

7. Formkörper nach Anspruch 6, dadurch gekennzeichnet, daß er eine Ausnehmung (26) zur Aufnahme eines mit Exoten wie z. B. Baumwollfrucht besetzten Korkens (28) aufweist.

8. Formkörper nach Anspruch 6 oder 7, dadurch gekennzeichnet, daß die Ausnehmung (26) einen reibschlüssigen Kontakt mit dem eingesetzten Korken (28) bietet.

## Claims

1. Porous moulding, shaped without cutting, as base suitable for receiving pins for the mounting of floral decorations, characterized in that the moulding consists of the constituents 65% cork granulate (12, 14), 5% sawdust (16), 5% pine needles (18) and 25% binding agent (20) of urea condensation products.

2. Moulding according to Claim 1, characterized in that the cork granulate comprises cork waste (12) of a particle size of preferably 1 mm to 2 mm and cork flour (14).

3. Moulding according to Claim 2, characterized in that the proportion by wt. of the cork waste (12) is 60% and that of the cork flour (14) is 40%.

4. Moulding according to one or more of the preceding Claims 1 to 3, characterized in that it contains finely distributed pine needles (18) or pine waste.

5. Moulding according to one or more of the preceding Claims 1 to 4, characterized in that it possesses a coating of cold glue (22).

6. Moulding according to one or more of the preceding Claims 1 to 5, characterized in that it is formed as a heart-shaped, cruciform, cushion-shaped or rhombic pin-receiving base (10) for flowers and wreaths (24).

7. Moulding according to Claim 6, characterized in that it possesses a recess (26) for receiving a cork (28) provided with exotic plants such as cotton fruit.

8. Moulding according to Claim 6 or 7, characterized in that the recess (26) offers a friction-locking contact with the inserted cork (28).

## Revendications

1. Pièce poreuse faite en forme servant de support enfichable pour l'introduction de décorations végétales, caractérisée en ce que la pièce se compose de: 65 % de granulat de liège (12, 14), 5 % de sciure de bois (16), de 5 % d'aiguilles de pin (18) et de 25 % de liant (20) en produits de condensation d'urée.

2. Pièce suivant la revendication 1, caractérisée en ce que le granulat de liège contient du granulé de liège (12) d'une granulométrie allant, de préférence, de 1 à 2 mm, et de la sciure de liège (14).

3. Pièce suivant la revendication 2, caractérisée en ce que la partie pondérale du granulé de liège (12) se monte à 60 % et celle de la sciure de liège (14) à 40 %.

4. Pièce suivant l'une ou plusieurs de revendications précédentes 1 à 3, caractérisée en ce qu'elle contient des aiguilles de pin (18) ou de granulé de pin qui sont finement répartis.

5. Pièce suivant l'une ou plusieurs des revendications précédentes 1 à 4, caractérisée en ce qu'elle comprend une couche de colle (22) durcissable à froid.

6. Pièce suivant l'une ou plusieurs de revendications précédentes 1 à 5, caractérisée en ce qu'elle est formée d'un support enfichable (10) en forme de coeur, de croix, de coussin, ou de losange, pour la décoration (24) de monuments funéraires.

7. Pièce suivant la revendication 6, caractérisée en ce qu'elle présente un creux (26) pour loger un bouchon en liège (28) garni de plantes exotiques, telles que, par exemple, des fruits de coton.

8. Pièce suivant la revendication 6 ou 7, caractérisé en ce que le creux (26) offre un contact à friction au bouchon (28) inséré.
